(19) Europäisches Patentamt

European Patent Office

Office européen des brevets

(11) **EP 1 587 306 A2**

(12) **EUROPEAN PATENT APPLICATION**

(43) Date of publication:
**19.10.2005 Bulletin 2005/42**

(51) Int Cl.⁷: **H04N 5/217**

(21) Application number: **05252288.5**

(22) Date of filing: **13.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **16.04.2004 JP 2004122219**<br><br>(71) Applicant: **SHARP KABUSHIKI KAISHA**<br>**Osaka-shi, Osaka 545-8522 (JP)** | (72) Inventors:<br>• **Iwai, Yoshio**<br>  **Nara 639-1103 (JP)**<br>• **Kimura, Katsuji**<br>  **Yao-shi Osaka 581-0831 (JP)**<br>• **Yoshida, Takuji**<br>  **Nara-shi Nara 630-8101 (JP)**<br><br>(74) Representative: **Brown, Kenneth Richard et al**<br>**R.G.C. Jenkins & Co.**<br>**26 Caxton Street**<br>**London SW1H 0RJ (GB)** |

(54) **Image processing apparatus and corresponding method for correcting optical distortions**

(57)    In the DSP which processes an image pickup signal obtained via an optical lens (imaging optical system) and outputs the resulting image pickup signal as processes to an image display section, distortion aberration due to the optical lens is corrected according to a distance from a pixel position corresponding to an optical axis of the optical lens by changing the pixel position for each of a target image in radial directions when the pixel position corresponding to the optical axis is set as a center while suppressing an occurrence of jaggy in the resulting image. With this structure, an image pickup apparatus which corrects distortion aberration by changing pixel position only in radial directions from a pixel position corresponding to an optical axis of the imaging optical system while suppressing an occurrence of jaggy.

FIG. 1

EP 1 587 306 A2

Printed by Jouve, 75001 PARIS (FR)

**Description**

FIELD OF THE INVENTION

The present invention relates to an image pickup apparatus for processing image pickup signal as outputted from a solid-state image pickup element and other image processing apparatuses, which are applicable to, for example, video cameras, electron still cameras, cameras for portable telephones, and other electron cameras.

BACKGROUND OF THE INVENTION

In recent years, solid-state image pickup apparatuses adopting solid-state image pickup elements have been widely used for video cameras, electron still cameras, cameras for potable telephones, and other electron cameras. For such solid-state image pickup apparatuses, it is expected to improve the quality of the image picked up by the solid-state image pickup apparatus. To realize improved image quality, known solid-state image pickup apparatus adopts an imaging optical system of improved performances, combine a plurality of optical lens in the imaging optical system, or performs a distortion aberration by processing an image pickup signal obtained via the imaging optical system, to suppress the distortion aberration of the imaging optical system.

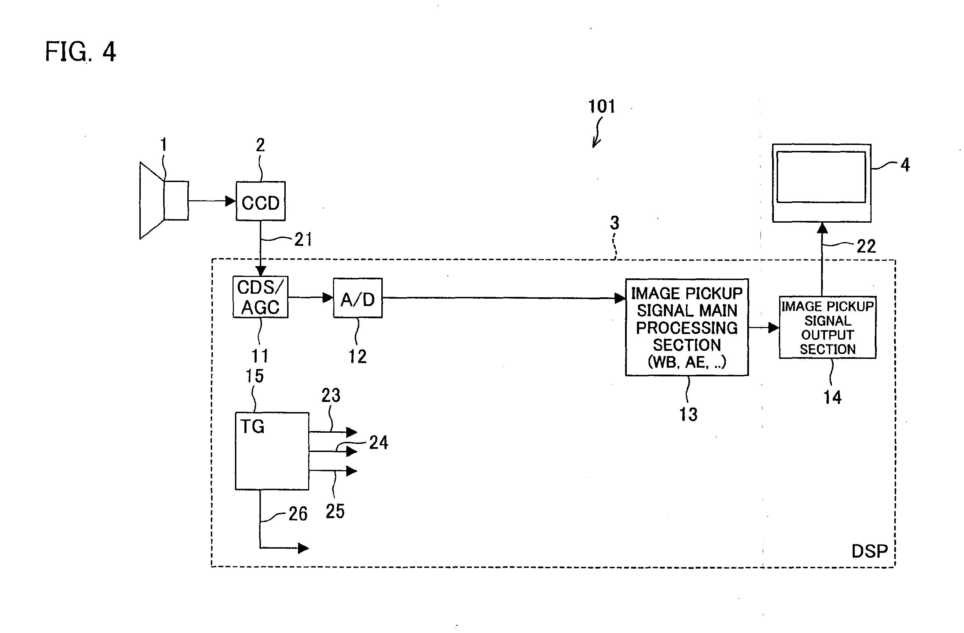

Figure 4 is a block diagram illustrating the structure of a conventional solid-state image pickup apparatus 101.

As shown in Figure 4, the solid-state image pickup apparatus 101 includes an optical lens 1 as an example of an imaging optical system, a CCD 2 as an example of the solid-state image pickup element, a digital signal processing section 3 (hereinafter referred to as a DSP 3), and an output image display section 4. In Figure 4, a CCD output signal 21 is an image pickup signal as outputted from the CCD 2, and a DSP output signal 22 is an image pickup signal as outputted from the DSP 3.

According to the foregoing conventional structure, an image from an object is formed on a light receiving section of the CCD 2 by the optical lens 1. The light received by the light receiving section of the CCD 2 is subjected to photoelectric transfer by the CCD 2 to be an analog electrical signal (hereinafter referred to as an image pickup signal), and is then transferred to the DSP 3 as the CCD output signal 21. The image pickup signal is subjected to various processes in the DSP 3, and is then transferred to the output image display section 4 as a DSP output signal 22 suited for the display section, and a corresponding image is then displayed on the display screen.

In the following, more detailed explanations on the internal structure of the DSP 3 will be explained.

The DSP 3 includes an image signal pre-processing section 11, an analog/digital converting section 12 (hereinafter referred to as an A/D converting section 12), an image signal main processing section 13, an image signal output section 14, and a timing signal generator 15 (hereinafter referred to as a TG 15).

The image signal pre-processing section 11 performs a CDS (correlation double sampling circuit) to reduce noise, and an AGC (automatic gain controller) to control amplitude.

The A/D converting section 12 converts an analog signal of the image pickup signal into a digital signal, and then transfers the resulting digital signal to the image signal main processing section 13.

The image signal main processing section 13 performs various types of digital signal image possessing with respect to the image pickup signal as converted into the digital signal such as white balance control (hereinafter referred to as WBC), automatic exposure control(hereinafter referred to as AEC), gamma correction control, etc., to be transferred to the image signal output section 14.

The image signal output section 14 converts an image pickup signal having gone through the digital signal image processing into a signal format, corresponding to the output image display section 4, and the resulting signal is then outputted to the output image display section 4 together with a vertical sync signal 24 (hereinafter referred to as a VD 24) and a horizontal sync signal 25 (hereinafter referred to as a HD 25) as generated by the TG 15, and other timing signals needed for displaying an output signal. Non-limited examples of the timing pulses as outputted from the TG 15 include a timing pulse 23, a VD 24, an HD 25 and a clock pulse 26, etc., and each of these timing pulses is used as a sync pulse to be processed in the corresponding one of the processing sections.

However, the foregoing conventional solid-state image pickup apparatus has a problem in that an image displayed in the output image display section 4 is distorted due to distortion aberration as occurred via the imaging optical system.

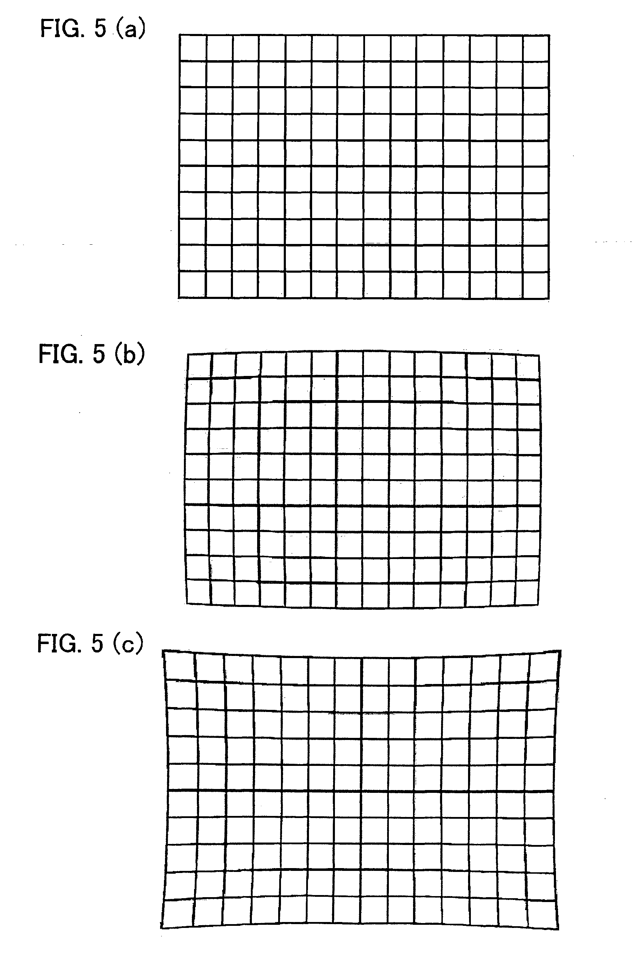

For example, assuming that an image as received by the solid-state image pickup element via an ideal imaging optical system without distortion aberration is a grid pattern as shown in Figure 5(a), then an image as received by the solid-state image pickup element via an imaging optical system with distortion aberration has a geometric distortion as shown in Figure 5(b) and Figure 5(c).

In response, solid-state image pickup apparatuses having the structure for correcting such distortion aberration have been proposed.

For example, the patent document 1: Japanese Laid-Open Patent Publication 2003/37769 ((Tokukai 2003-37769), published on February 7, 2003) discloses a signal processing apparatus wherein a correction of the distortion aberration due to the imaging optical system is performed with respect to an image signal of a target optical image as received via the imaging optical system. Specifically, the patent document 1 discloses techniques for correcting the distortion aberration in the second direction that is different from the first direction on the basis of the distortion aberration in the first direction of the target image, whereby the process of correcting the distortion aberration of an image pickup signal can be performed at high speed, and unnaturalness of the image as a whole is eliminated.

The patent document 2: Japanese Patent No. 3035416 (registered on February 18, 2000) ((Japanese Laid-Open Patent Publication 6-165024/1994 (Tokukaihei 6-165024/1994), published on June 10, 1994, corresponding to the US patent 5,905,530) discloses the structure of correcting the distortion aberration due to the imaging optical system wherein the correction means is provided for correcting the image signal using a predetermined reference circle on the screen around the optical axis position of the imaging optical system as a center, the reference circle being formed to have the target image both inside and outside the circle. In this correction method, for the part of the target image outside the reference circle is corrected outwardly, and the part of the target image inside the circle is corrected inwardly.

According to the method of correcting the distortion aberration of the patent document 1 to realize improved image quality, the distortion aberration in the first direction is corrected on the basis of the distortion aberration in the second direction different from the first direction.

In the foregoing correcting method of the patent document 1, the correcting processes are performed respectively in the first direction and the second direction, and it is not sufficient in view of that it is necessary to consider the correcting process in the second direction to perform the correcting process in the first direction.

Additionally, when carrying out the process of correcting the distortion aberration with respect to a straight line in the image with the distortion aberration, the corresponding line as corrected becomes a curved line. Here, when adopting the method of the patent document 2 for the foregoing correction of the distortion aberration, a jaggy would occur in the curve. However, the patent document 2 does not address the problem of jaggy which is likely to occur in the process of correcting the distortion aberration, nor the means for preventing the problem of jaggy generated in the corrected image.

SUMMARY OF THE INVENTION

In view of the foregoing problems associated with the conventional structure, it is an object of the present invention to provide an image pickup apparatus or other image processing apparatuses, an image processing method, a control program for such image processing apparatuses and a recording medium, which corrects distortion aberration by changing each pixel position only in radial directions from a pixel position corresponding to an optical axis of the imaging optical system while suppressing an occurrence of jaggy.

The image pickup apparatus of the present invention is characterized by including:

signal processing means for processing an image pickup signal as outputted from a solid-state image pickup element which performs a photoelectric transfer with respect to an incident light, wherein:

the signal processing means (i) performs a correction of distortion aberration due to an imaging optical system with respect to an image pickup signal obtained via the imaging optical system, by changing in radial directions, a pixel position of each pixel in a target image corresponding to the image pickup signal obtained via the imaging optical system when a pixel position corresponding to an optical axis of the imaging optical system is set as a center, the pixel position being located substantially at a center of a target image subjected to the correction, according to a distance from the pixel position corresponding to the optical axis, and (ii) suppresses an occurrence of jaggy in a resulting corrected image.

According to the present invention, it is possible to realize an image pickup apparatus, which corrects distortion aberration by changing each pixel position only in radial directions from a pixel position corresponding to an optical axis of the imaging optical system while suppressing an occurrence of jaggy.

According to the foregoing structure, the distortion aberration can be corrected by processing an image pickup signal by the signal processing means. It is therefore possible to correct the distortion aberration of respective imaging optical systems having unique characteristics with ease. The foregoing structure of the present invention also offers the effect of further improving the performances of the imaging optical system and realizing a smaller size imaging optical system as it is not necessary to combine a plurality of imaging optical systems.

The signal processing method of the present invention for processing an image pickup signal as outputted from a solid-state image pickup element which performs a photoelectric transfer with respect to an incident light, is characterized by including the steps of:

(i) carrying out a correction of distortion aberration due to an imaging optical system with respect to an image pickup signal obtained via the imaging optical system, by changing in radial directions, a pixel position of each pixel in a target image corresponding to the image pickup signal obtained via the imaging optical system when a pixel position corresponding to an optical axis of the imaging optical system is set as a center, the pixel position being located substantially at a center of a target image subjected to the correction, according to a distance from the pixel position corresponding to the optical axis; and

(ii) suppressing an occurrence of jaggy in a resulting image.

According to the present invention, it is possible to realize the signal processing method, which corrects distortion aberration by changing each pixel position only in radial directions from a pixel position corresponding to an optical axis of the imaging optical system while suppressing an occurrence of jaggy.

According to the foregoing signal processing method of the present invention, the distortion aberration can be corrected by processing an image pickup signal by the signal processing means. It is therefore possible to correct the distortion aberration of respective imaging optical systems having unique characteristics with ease. The foregoing method of the present invention also offers the effect of further improving the performances of the imaging optical system and realizing a compact imaging optical system as it is not necessary to combine a plurality of imaging optical systems.

The program of the present invention is characterized by making a computer to execute the image processing method.

According to the present invention, a general purpose image processing method can be realized.

The recording medium of the present invention is characterized by storing a program of the present invention so as to be readable by a computer.

According to the recording medium of the present invention, it is possible to provide the problem of the present invention with ease.

According to the foregoing image pickup apparatus and the signal processing method of the present invention, the distortion aberration due to an imaging optical system is corrected with respect to an image pickup signal obtained via the imaging optical system, by changing a pixel position of each pixel in a target image in radial directions from a pixel position corresponding to an optical axis of the imaging optical system, according to a distance from the pixel position corresponding to the optical axis, while suppressing an occurrence of jaggy in a resulting corrected image.

According to the foregoing structure, the distortion aberration can be corrected by changing each pixel position only radial directions from a pixel position corresponding to the optical axis of the imaging optical system, while suppressing an occurrence of jaggy in a resulting corrected image.

An image processing apparatus of the present invention is characterized by including:

an input section for inputting an image pickup signal as obtained from an image pickup element which performs a photoelectric transfer with respect to an incident light via an optical system; and

distortion aberration correction means which performs an aberration correction by changing a pixel position with respect to each target pixel in a target image subjected to the correction, the target image corresponding to an image pickup signal inputted by the input section, in a direction of connecting a pixel position on the optical axis of the optical system and each target pixel according to a distance from the pixel position corresponding to the optical axis of the imaging optical system to a pixel position of each pixel in the target image, whereby a corrected image is generated.

It is preferable that the foregoing image processing apparatus of the present invention be arranged so as to further include:

jaggy correction means which performs a filtering process as a jaggy correction process with respect to the corrected image,

wherein the filtering process is performed by weighting according to the pixel position of the target pixel in the corrected image.

It is preferable that the foregoing image processing apparatus of the present invention be arranged such that:

the distortion aberration correction means performs the correction of the distortion aberration using the approximate expressions of:

$$x = x'(1 - kr'^2) \tag{a}$$

$$y = y' (1 - kr'^2) \qquad\qquad (b)$$

wherein (x, y) indicates a coordinate value of each pixel in an ideal image without distortion aberration, (x', y') indicates a coordinate value of each target pixel in a corresponding target image subjected to the correction of the distortion aberration, and r' indicates a distance from the pixel position corresponding to the optical axis of said optical system.

It is preferable that the foregoing image processing apparatus of the present invention be arranged such that:

the jaggy correction means uses a distance between a pixel position of each pixel in the ideal image and a pixel position of each reference pixel in a vicinity of the target image subjected to the correction, as a weighting parameter of the weight in the filtering process.

It is preferable that the foregoing image processing apparatus of the present invention be arranged such that:

the jaggy correction means sets a parameter of the weight using a coordinate value (x, y) of each pixel in the ideal image, as computed by the distortion aberration correction means from the approximate expressions (a) and (b).

Another image processing apparatus of the present invention is characterized by including:

an input section for inputting an image pickup signal as obtained from an image pickup element which performs a photoelectric transfer with respect to light incident via an optical system; and
distortion aberration correction means which performs a correction of a distortion aberration of the image corresponding to the image pickup signal as inputted by the input section; and
jaggy correction means which performs a filtering process with respect to the corrected image,

wherein the filtering process is performed by adjusting the weight in the filtering process according to the pixel position of each target pixel in the corrected image.

An image processing method of the present invention is characterized by including the steps of:

inputting an image pickup signal as obtained from an image pickup element which performs a photoelectric transfer with respect to an incident light via an optical system; and
carrying out an aberration correction by changing a pixel position with respect to each target pixel in a target image subjected to the correction, the target image corresponding to an image pickup signal inputted by the input section, in a direction of connecting a pixel position on the optical axis of the optical system and each target pixel according to a distance from the pixel position corresponding to the optical axis of the imaging optical system to a pixel position of each pixel in the target image, whereby a corrected image is generated.

Another image processing method is characterized by including the steps of:

inputting an image pickup signal as obtained from an image pickup element which performs a photoelectric transfer with respect to an incident light via an optical system; and
correcting a distortion aberration of the image corresponding to the image pickup signal as inputted by the input section; and
carrying out a filtering process as a jaggy correction process with respect to the corrected image,

wherein the filtering process is performed by adjusting the weight in the filtering process according to the pixel position of each target pixel in the corrected image.

The control program of an image processing apparatus is characterized by making a computer execute respective means of the image processing apparatus.

The recording medium of the present invention is characterized by being a computer readable recording medium storing the foregoing program of the present invention.

For a fuller understanding of the nature and advantages of the invention, reference should be made to the ensuing detailed description taken in conjunction with the accompanying drawings.

BRIEF DESCRIPTION OF THE DRAWINGS

Figure 1 is a block diagram illustrating essential structures of the image pickup apparatus in accordance with embodiments of the present invention.

Figure 2(a) and Figure 2(b) are conceptual diagrams which show characteristics of the distortion aberration which explain the principle of the distortion aberration correction by the image pickup apparatus of Figure 1.

Figure 3(a) and Figure 3(b) are conceptual diagrams which explain the distortion aberration correction process by the image pickup apparatus of Figure 1.

Figure 4 is a block diagram illustrating essential structures of a conventional image pickup apparatus.

Figure 5(a) through Figure 5(c) are conceptual diagrams which explain the distortion aberration.

DESCRIPTION OF THE EMBODIMENTS

The following descriptions will explain respective embodiments of the present invention in reference to figures.

[First Embodiment]

In the preferred embodiment of the present invention, the distortion aberration due to the imaging optical system, in the image pickup signal (CCD output signal) transferred from the solid-state image pickup element, is corrected by the digital signal processing section (DSP) and jaggy which is likely to occur in the process of correcting the distortion aberration is suppressed by performing the filtering process, to realize desirable image.

In the following, a preferred embodiment of the present invention will be explained in reference to the attached figures. For convenience in explanations, members having the same functions as those of the conventional structure as explained under the section "Background of the Invention" will be designated by the same reference numerals, and thus the descriptions thereof shall be omitted here.

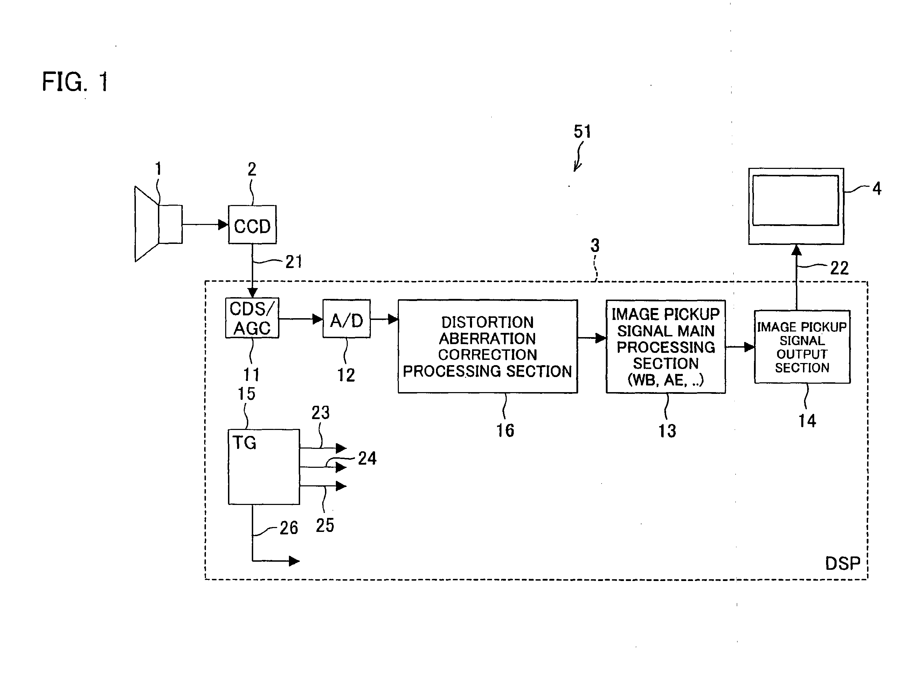

Figure 1 shows the structure of the solid-state image pickup apparatus (image pickup apparatus) 51 in accordance with the present embodiment. The solid-state image pickup apparatus 51 is arranged that the DSP (signal processing means) 3 in the solid-state image pickup apparatus in the conventional structure shown in Figure 4 functions as distortion aberration correction means for correcting distortion aberration and jaggy correction to carry out a filtering process to suppress jaggy. As a concrete means to carry out both of the above two functions, provided between the A/D converting section 12 and the image signal main processing section 13 is a distortion aberration correction processing section 16. With this structure, the image pickup signal as outputted from the DSP 3 is subjected to the distortion aberration correction process and the filtering process for suppressing jaggy which is likely to generate in the outline portion of the image. Incidentally, for the solid-state image pickup element, other than the CCD 2, a COMS image pickup element may be adopted, for example.

Next, the distortion aberration process by the DSP 3 in accordance with the present embodiment will be explained. In the present embodiment, the relationship between the ideal image without distortion aberration and an image with distortion aberration obtained via the imaging optical system is figured out using the approximate expression obtained from the paraxial theory for lens.

Firstly, the relationship between an ideal image f(x, y) without distortion aberration and an image f'(x', y') with distortion aberration obtained via the imaging optical system will be explained.

The distortion aberration generally indicates the phenomenon wherein the image is expanded or contracted in radial directions from the center, and the resulting image is thus distorted.

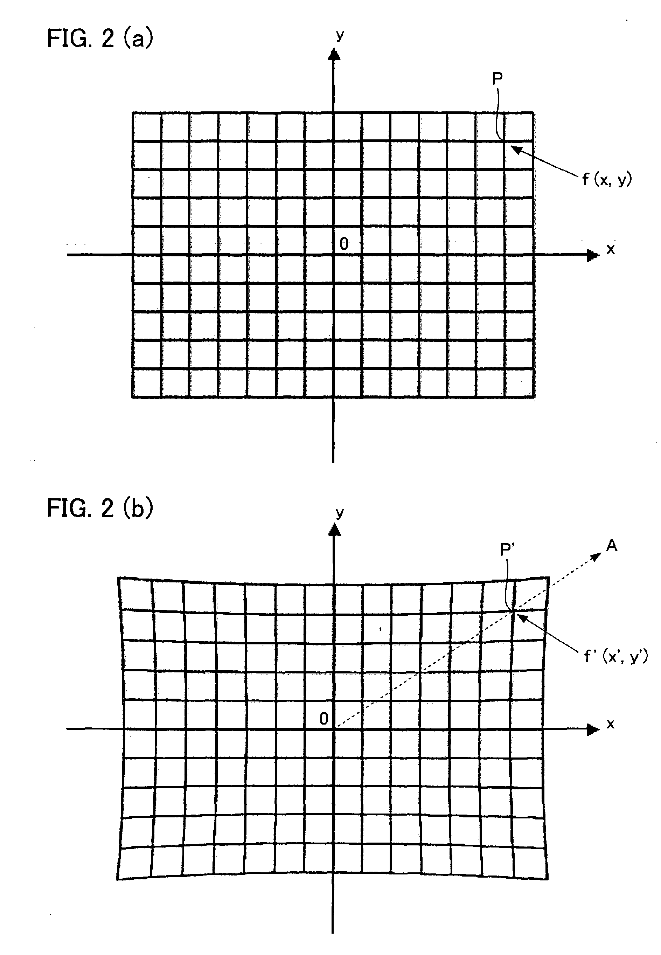

Here, the center of the image is defined to be the point at which the optical axis of the imaging optical system crosses the solid-state image pickup element. For example, the position of the point P shown in Figure 2(a) is changed in radial directions (in the direction of an arrow A), and corresponds to the point P' shown in Figure 2(b).

The degree of distortion aberration is determined based on the distance r from the center of the target image (the distance from the pixel position corresponding to the optical axis of the imaging optical system), and the distortion aberration due to the imaging optical system is symmetrical about the point with respect to the center of the ideal image. The relationship between the ideal image without distortion aberration and a target image with distortion aberration can be expressed by the following equations (1) to (3) according to the paraxial theory for the lens. Here, k indicates a proportionality factor.

$$r'=r+kr^3 \qquad\qquad (1)$$

$$r^2 = x^2 + y^2 \tag{2}$$

$$r'^2 = x'^2 + y'^2 \tag{3}$$

By breaking down the above equation (1) into the x-axis components and y-axis components, the following equations (4) and (5) can be obtained. Here, θ is defined to be an angle formed by the line connecting the point P and the origin and the positive direction of the x-axis.

Incidentally, r indicates a distance from the center of an ideal image f (x, y) without distortion aberration, and r' indicates a distance from the center of the image f'(x', y') with the distortion aberration obtained via the imaging optical system, i.e., the distance from the pixel position corresponding to the optical axis of the imaging optical system.

$$x' = r'\cos\theta = (r + kr^3) \times \frac{x}{r} = x(1 + kr^2) \tag{4}$$

$$y' = r'\sin\theta = (r + kr^3) \times \frac{y}{r} = y(1 + kr^2) \tag{5}$$

To correct the distortion aberration is to perform an inverse transition of the equations (4) and (5) from the image with distortion aberration to the image without distortion aberration.

However, as these equations (4) and (5) are nonlinear functions, it is not practical to perform the inverse translation of the equations (4) and (5), as an amount of calculation becomes too large.

In response, in view of that i) the ratio of r and r' to Δr (= r-r') is small enough to be ignored, and that ii) the ratio of distortion is around several percents for the actually used imaging optical system, the following equations (6) and (7) can be obtained from the equations (4) and (5), by assuming that r is approximated to r' (r ≒ r) in the equations (4) and (5).

$$x = x'(1 + kr'^2)^{-1} \tag{6}$$

$$y = y'(1 + kr'^2)^{-1} \tag{7}$$

Here, when the condition of k · r' 2 ≪ 1 holds, the equations(6) and (7) can be approximated to the following equations (8) and (9).

$$x = x'(1 - kr'^2) \tag{8}$$

$$y = y'(1 - kr'^2) \tag{9}$$

In the present embodiment, the distortion aberration is corrected using the foregoing equations (8) and (9).

When correcting the distortion aberration, a filtering process is performed using reference pixels surrounding each target pixel to suppress an occurrence of jaggy which is liable to occur in the outline portion of the image.

As preferable example for the filtering process, the method of utilizing the distance between the coordinate value (x, y) and a coordinate value (x', y') of each pixel around the target pixel, which is obtained by the equations (8) and (9) when carrying out the correction of the distortion aberration, is used as a parameter for the weight in the filtering process.

In the target image subjected to the correction, the distance between each target pixel (x, y) and each of the four pixels surrounding the target pixel differs depending on the position on the image subjected to the correction due to the effect of the distortion aberration. Namely, an amount of distortion aberration is not constant in the entire image subjected to the correction, and it differs depending on the position on the image.

According to the present embodiment, when figuring out the coordinate value (x, y) of each pixel in the ideal image according to a distance between each pixel position of the reference pixels surrounding the target pixel in the target image subjected to the correction and the pixel position of the target pixel, it is possible to suppress an occurrence of jaggy when carrying out the distortion aberration.

In this way, infinite number of parameter settings becomes available, and it is therefore possible to obtain a suitable image that cannot be obtained by the uniform parameter setting for the filtering process as adopted in the conventional jaggy correcting process. In the generally used jaggy correcting process, basically, irrespectively of the pixel position of the target pixel, a weight for the filter is not adjusted. In the generally used filtering method, the direction components of the edge where a jaggy occurs may be taken into consideration, and in this case, a table for setting parameters may be rotated. Specifically, assuming that when the direction component of the edge is a linear direction connecting the left lower end and the right upper end of the image, the parameter for the weight in the filtering process is set in the Table 1, then the weight for the parameter in the filtering process when the direction component of the edge is the linear direction connecting the left upper end to the right lower end of the image, the parameter for the weight in the filtering process is set in the Table 2 obtained by rotating the Table 1. With the foregoing generally used jaggy correction method, as the jaggy correction process can be performed according to the direction of the image, it is possible to improve an image quality to some extent. According to the jaggy correction method of the present embodiment wherein the jaggy correction is performed by adjusting a weight according to the coordinate value (x, y) of each pixel in the target image, a significant improvement in image quality can be realized.

Table 1

| a | b | c |
|---|---|---|
| d | e | f |
| g | h | i |

Table 2

| g | d | a |
|---|---|---|
| h | e | b |
| i | f | c |

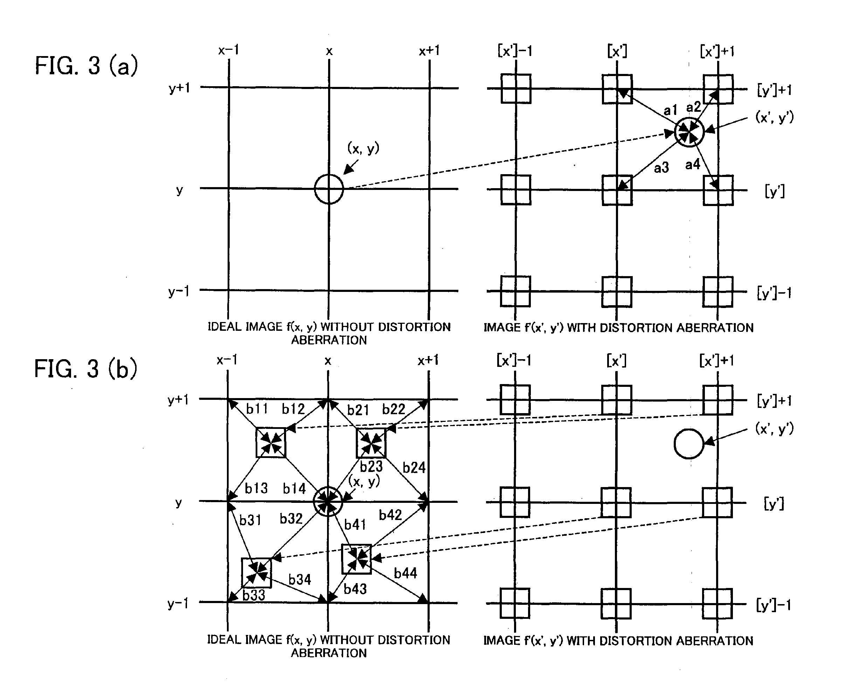

For the filtering process, for example, the following two methods may be adopted as shown in Figure 3(a) and Figure 3(b). As the first example, from the coordinate value f(x, y) of each pixel in the ideal image f(x, y) without distortion aberration shown in the diagram on the left hand side of Figure 3(a), the weight factor ai (Σai =1, i = 1 to 4) for the filtering process may be obtained based on a distance between a coordinate value (x', y') of each pixel in a prescribed target image f'(x', y') with the distortion aberration shown in the figure on the right hand side (Figure 3(a)) and a coordinate value of each of the reference pixels around the above target pixel.

In the foregoing example, four pixels are used as the reference pixels; however, the number of pixels can be changed according to the distance. However, for example, in Figure 3(a), in the case of (x', y') is very close to ([x'], [y']), i.e., a3 ≒ 0, it is preferable to substitute a coordinate value ([x'], [y']) of a pixel, to (x', y') rather than filtering. On the other hand, in the case where (x', y') is on or close to the line connecting ([x'], [y']) and ([x'], [y']+1), it is preferable to use the coordinate values of the pixels ([x'], [y']) and ([x'], [y']1+1).

Then, the ideal image f(x, y) without distortion aberration can be obtained using the weight factor ai, for example, from the following formula (10).

$$f(x,y)=a1\times f'([x'],[y']+1)+a2\times f'([x']+1,[y']+1)$$

$$+a3\times\ f'([x'],[y'])+a4\times f'([x']+1,[y'])\qquad(10)$$

As the second example, a coordinate value (x, y) of each pixel in the ideal image f (x, y) shown in the figure on the left hand side in Figure 3 is figured out using the reference pixels around the target pixel from the equation (8) and the equation (9) in the first example, and then the weight factor bjk of the filtering process can be obtained using the distance between the pixel position of the target pixel (x, y) and the pixel position of each of the reference pixels around the target pixel (x, y). In this method, the weight factor bjk satisfies the condition of:

$$\left(\sum_{k}bjk=1,\ j,\ k\ =\ 1\ to\ 4\right).$$

In this example, four pixels are used as the reference pixels; however, the number of pixels can be changed according to the distance as in the case of the first example. Then, the ideal image f(x, y) without distortion aberration can be obtained from the target image f'(x', y') with distortion aberration shown in the figure on the right hand side in Figure 3(b) using the weight factor bjk, for example, from the following the following formula (11).

$$f(x,y)=b14\times f'([x'],[y']+1)+b23\times f'([x']+1,[y']+1)$$

$$+b32\times f'([x'], [y']) + b41 \times f'([x'] + 1, [y']) \tag{11}$$

As described, according to the method of the present embodiment, an occurrence of jaggy can be suppressed using the parameter for the correction of the distortion aberration, and it is possible to obtain an image of an improved quality from that obtained from the conventional correction of the distortion aberration.

Incidentally, the signal processing method in accordance with the present embodiment may be performed by making a computer stored in the solid-state image pickup apparatus 51 execute the program containing the processes explained in reference to Figure 2 or Figure 3. As a result, a general purpose image processing method of the solid-state image pickup apparatus 51 can be realized.

It is possible to provide the foregoing program of the present embodiment, for example, by storing it in a computer readable recording medium. As a result, it is possible to provide the program of the present embodiment with ease. For the recording medium of the present invention, built-in media, such as memory devices stored in a computer main body of the solid-state image pickup apparatus 51, or removable media that are removable from the computer main body may be adopted. Examples of such built-in media include: Read Only Memory (ROM); rewritable nonvolatile memory, such as flash memory, etc.; and hard disk, etc. Examples of the removable media include: optical recording media such as CD-ROM (Compact Disk-Read Only Memory), DVD (Digital Versatile Disk), etc.; magneto-optical recording media such as MO, etc., magnetic recording media such as floppy ("floppy" is a registered mark) disk, cassette tape, removable hard disk, etc.; media storing rewritable nonvolatile memory such as memory card, etc.; media storing ROM such as ROM cassette, etc.

The present invention may be arranged so as to execute the program by making an access to the DSP 2 shown in Figure 1 or the CPU (not shown), or to execute the program on the storage media by an access to the DSP 3 or the CPU, after reading the program from the recording medium, and then transferring the program as read into a program memory area of the storage media. The program can be executed by the operations of only DSP 3 or the CPU alone or in combination. The program of the present invention is not intended to be limited to those stored in the computer readable recording medium available in the market, and may be transferred to a user computer via a communication network such as internet.

The present invention is applicable to video cameras, electron still cameras, cameras for portable telephones, and other electron cameras, and image processing apparatuses, etc., to be stored in these cameras.

The image pickup apparatus of the present invention is characterized by including:

signal processing means for processing an image pickup signal as outputted from a solid-state image pickup element which performs a photoelectric transfer with respect to an incident light, wherein:

the signal processing means (i) performs a correction of distortion aberration due to an imaging optical system with respect to an image pickup signal obtained via the imaging optical system, by changing in radial directions, a pixel position of each pixel in a target image corresponding to the image pickup signal obtained via the imaging optical system when a pixel position corresponding to an optical axis of the imaging optical system is set as a center, the pixel position being located substantially at a center of a target image subjected to the correction, according to a distance from the pixel position corresponding to the optical axis, and (ii) suppresses an occurrence of jaggy in a resulting corrected image.

According to the present invention, it is possible to realize an image pickup apparatus, , which corrects distortion aberration by changing each pixel position only in radial directions from a pixel position corresponding to an optical axis of the imaging optical system while suppressing an occurrence of jaggy.

According to the foregoing structure, the distortion aberration can be corrected by processing an image pickup signal by the signal processing means. It is therefore possible to correct the distortion aberration of respective imaging optical systems having unique characteristics with ease. The foregoing structure of the present invention also offers the effect of further improving the performances of the imaging optical system and realizing a smaller size imaging optical system as it is not necessary to combine a plurality of imaging optical systems.

The signal processing method of the present invention for processing an image pickup signal as outputted from a solid-state image pickup element which performs a photoelectric transfer with respect to an incident light, is characterized by including the steps of:

(i) carrying out a correction of distortion aberration due to an imaging optical system with respect to an image pickup signal obtained via the imaging optical system, by changing in radial directions, a pixel position of each pixel in a target image corresponding to the image pickup signal obtained via the imaging optical system when a pixel position corresponding to an optical axis of the imaging optical system is set as a center, the pixel position being located substantially at a center of a target image subjected to the correction, according to a distance from the pixel position corresponding to the optical axis; and

(ii) suppressing an occurrence of jaggy in a resulting image.

According to the present invention, it is possible to realize the signal processing method, which corrects distortion aberration by changing each pixel position only in radial directions from a pixel position corresponding to an optical axis of the imaging optical system while suppressing an occurrence of jaggy.

According to the foregoing signal processing method of the present invention, the distortion aberration can be corrected by processing an image pickup signal by the signal processing means. It is therefore possible to correct the distortion aberration of respective imaging optical systems having unique characteristics with ease. The foregoing method of the present invention also offers the effect of further improving the performances of the imaging optical system and realizing a smaller size imaging optical system as it is not necessary to combine a plurality of imaging optical systems.

The program of the present invention is characterized by making a computer to execute the image processing method.

According to the present invention, a general purpose image processing method can be realized.

The recording medium of the present invention is characterized by storing a program of the present invention so as to be readable by a computer.

According to the recording medium of the present invention, it is possible to provide the problem of the present invention with ease.

According to the foregoing image pickup apparatus and the signal processing method of the present invention, the distortion aberration due to an imaging optical system is corrected with respect to an image pickup signal obtained via the imaging optical system, by changing a pixel position of each pixel in a target image in radial directions from a pixel position corresponding to an optical axis of the imaging optical system, according to a distance from the pixel position corresponding to the optical axis, while suppressing an occurrence of jaggy in a resulting corrected image.

According to the foregoing structure, the distortion aberration can be corrected by changing each pixel position only in radial directions from a pixel position corresponding to an optical axis of the imaging optical system while suppressing an occurrence of jaggy.

An image processing apparatus of the present invention is characterized by including:

an input section for inputting an image pickup signal as obtained from an image pickup element which performs a photoelectric transfer with respect to an incident light via an optical system; and

distortion aberration correction means which performs an aberration correction by changing a pixel position with respect to each target pixel in a target image subjected to the correction, the target image corresponding to an image pickup signal inputted by the input section, in a direction of connecting a pixel position on the optical axis of the optical system and the target pixel according to a distance from the pixel position corresponding to the optical axis of the imaging optical system to a pixel position of each pixel in the target image, whereby a corrected image is generated.

It is preferable that the foregoing image processing apparatus of the present invention be arranged so as to further include:

jaggy correction means which performs a filtering process as a jaggy correction process with respect to the corrected image,

wherein the filtering process is performed by weighting according to the pixel position of the target pixel in the corrected image.

It is preferable that the foregoing image processing apparatus of the present invention be arranged such that:

the distortion aberration correction means performs the correction of the distortion aberration using the approximate expressions of:

$$x = x'(1 - kr'^2) \tag{a}$$

$$y = y'(1 - kr'^2) \tag{b}$$

wherein (x, y) indicates a coordinate value of each pixel in an ideal image without distortion aberration, (x', y') indicates a coordinate value of each target pixel in a corresponding target image subjected to the correction of the distortion aberration, and r' indicates a distance from the pixel position corresponding to the optical axis of said optical system.

It is preferable that the foregoing image processing apparatus of the present invention be arranged such that:

the jaggy correction means uses a distance between a pixel position of each pixel in the ideal image and a pixel position of each reference pixel in a vicinity of the target image subjected to the correction, as a weighting parameter of the weight in the filtering process.

It is preferable that the foregoing image processing apparatus of the present invention be arranged such that:

the jaggy correction means sets a parameter of the weight using a coordinate value (x, y) of each pixel in the ideal image, as computed by the distortion aberration correction means from the approximate expressions (a) and (b).

Another image processing apparatus of the present invention is characterized by including:

an input section for inputting an image pickup signal as obtained from an image pickup element which performs a photoelectric transfer with respect to light incident via an optical system; and
distortion aberration correction means which performs a correction of a distortion aberration of the image corresponding to the image pickup signal as inputted by the input section; and
jaggy correction means which performs a filtering process with respect to the corrected image,

wherein the filtering process is performed by adjusting the weight in the filtering process according to the pixel position of each target pixel in the corrected image.

An image processing method of the present invention is characterized by including the steps of:

inputting an image pickup signal as obtained from an image pickup element which performs a photoelectric transfer with respect to an incident light via an optical system; and
carrying out an aberration correction by changing a pixel position with respect to each target pixel in a target image subjected to the correction, the target image corresponding to an image pickup signal inputted by the input section, in a direction of connecting a pixel position on the optical axis of the optical system and each target pixel according to a distance from the pixel position corresponding to the optical axis of the imaging optical system to a pixel position of each pixel in the target image, whereby a corrected image is generated.

Another image processing method is characterized by including the steps of:

inputting an image pickup signal as obtained from an image pickup element which performs a photoelectric transfer with respect to an incident light via an optical system; and
correcting a distortion aberration of the image corresponding to the image pickup signal as inputted by the input section; and
carrying out a filtering process as a jaggy correction process with respect to the corrected image,

wherein the filtering process is performed by adjusting the weight in the filtering process according to the pixel position of each target pixel in the corrected image.

The control program of an image processing apparatus is characterized by making a computer execute respective means of the image processing apparatus.

The recording medium of the present invention is characterized by being a computer readable recording medium storing the foregoing program of the present invention.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

**Claims**

1.  An image pickup apparatus, comprising:

    signal processing means (3) for processing an image pickup signal as outputted from a solid-state image pickup element (2) which performs a photoelectric transfer with respect to an incident light, wherein:
    said signal processing means (3) (i) performs a correction of distortion aberration due to an imaging optical system (1) with respect to an image pickup signal obtained via said imaging optical system (1), by changing in radial directions, a pixel position of each pixel in a target image corresponding to the image pickup signal obtained via said imaging optical system when a pixel position corresponding to an optical axis of said imaging optical system (1) is set as a center, said pixel position being located substantially at a center of a target image subjected to the correction, according to a distance from the pixel position corresponding to the optical axis, and (ii) suppresses an occurrence of jaggy in a resulting corrected image.

2.  An image processing apparatus, comprising:

    an input section for inputting an image pickup signal as obtained from an image pickup element (2) which performs a photoelectric transfer with respect to an incident light via an optical system (1); and
    distortion aberration correction means (3, 16) which performs an aberration correction by changing a pixel position with respect to each target pixel in a target image subjected to the correction, said target image corresponding to an image pickup signal inputted by said input section, in a direction of connecting a pixel position on the optical axis of said optical system (1) and said each target pixel according to a distance from the pixel position corresponding to the optical axis of said imaging optical system (1) to a pixel position of each pixel in the target image, whereby a corrected image is generated.

3.  The image processing apparatus as set forth in claim 2, further comprising:

    jaggy correction means (3, 16) which performs a filtering process as a jaggy correction process with respect to said corrected image,

    wherein said filtering process is performed with a weight according to the pixel position of the target pixel in said corrected image.

4.  The image processing apparatus as set forth in claim 2, wherein:

    said distortion aberration correction means (3, 16) performs the correction of the distortion aberration using the approximate expressions of:

    $$x = x'(1 - kr'^2) \tag{a}$$

    $$y = y'(1 - kr'^2) \tag{b}$$

    wherein (x, y) indicates a coordinate value of each pixel in an ideal image without distortion aberration, (x', y') indicates a coordinate value of each target pixel in a corresponding target image subjected to the correction of the distortion aberration, and r' indicates a distance from the pixel position corresponding to the optical axis of said optical system(1).

5.  The image processing apparatus as set forth in claim 3, wherein:

    said distortion aberration correction means (3, 16) performs the correction of the distortion aberration using the approximate expressions of:

$$x = x'(1 - kr'^2) \quad\quad\quad\text{(a)}$$

$$y = y'(1 - kr'^2) \quad\quad\quad\text{(b)}$$

wherein (x, y) indicates a coordinate value of each pixel in an ideal image without distortion aberration, (x', y') indicates a coordinate value of each target pixel in a corresponding target image subjected to the correction of the distortion aberration, and r' indicates a distance from the pixel position corresponding to the optical axis of said optical system (1).

**6.** The image processing apparatus as set forth in claim 5, wherein:

said jaggy correction means (3, 16) uses a distance between a pixel position of each pixel in the ideal image and a pixel position of each reference pixel in a vicinity of the target image subjected to the correction, as a parameter of the weight in said filtering process.

**7.** The image processing apparatus as set forth in claim 6 wherein:

said jaggy correction means (3, 16) sets a parameter of the weight using a coordinate value (x, y) of each pixel in the ideal image, as computed by said distortion aberration correction means (3, 16) from said approximate expressions (a) and (b).

**8.** An image processing apparatus, comprising:

an input section for inputting an image pickup signal as obtained from an image pickup element (2) which performs a photoelectric transfer with respect to light incident via an optical system (1); and distortion aberration correction means (3, 16) which performs a correction of a distortion aberration of the image corresponding to the image pickup signal as inputted by said input section; and jaggy correction means (3, 16) which performs a filtering process with respect to the corrected image,

wherein the filtering process is performed by adjusting the weight in the filtering process according to the pixel position of each target pixel in the corrected image.

**9.** The image processing apparatus as set forth in claim 8, wherein:

said jaggy correction means (3, 16) uses a distance between a pixel position of each pixel in the ideal image and a pixel position of each reference pixel in a vicinity of the target image subjected to the correction, as a parameter of the weight in said filtering process.

**10.** A signal processing method for processing an image pickup signal as outputted from a solid-state image pickup element (2) which performs a photoelectric transfer with respect to an incident light, comprising the steps of:

(i) carrying out a correction of distortion aberration due to an imaging optical system (1) with respect to an image pickup signal obtained via said imaging optical system (1), by changing in radial directions, a pixel position of each pixel in a target image corresponding to the image pickup signal obtained via said imaging optical system (1) when a pixel position corresponding to an optical axis of said imaging optical system (1) is set as a center, said pixel position being located substantially at a center of a target image subjected to the correction, according to a distance from the pixel position corresponding to the optical axis; and
(ii) suppressing an occurrence of jaggy in a resulting image.

**11.** An image processing method, comprising the steps of:

inputting an image pickup signal as obtained from an image pickup element (2) which performs a photoelectric transfer with respect to an incident light via an optical system (1); and carrying out an aberration correction by changing a pixel position with respect to each target pixel in a target image subjected to the correction, said target image corresponding to an image pickup signal inputted by said input section, in a direction of connecting a pixel position on the optical axis of said optical system (1) and said each target pixel according to a distance from the pixel position corresponding to the optical axis of said imaging optical system (1) to a pixel position of each pixel in the target image, whereby a corrected image is generated.

**12.** An image processing method, comprising the steps of:

inputting an image pickup signal as obtained from an image pickup element (2) which performs a photoelectric transfer with respect to an incident light via an optical system (1); and

correcting a distortion aberration of the image corresponding to the image pickup signal as inputted by said input section; and

carrying out a filtering process as a jaggy correction process with respect to the corrected image,

wherein the filtering process is performed by adjusting the weight in the filtering process according to the pixel position of each target pixel in the corrected image.

**13.** A control program of an image processing apparatus for making a computer execute respective means of the image processing apparatus of any one of claims 2 to 9.

**14.** A control program of an image processing apparatus for making a computer execute respective means of the signal processing method of claim 10.

**15.** A computer readable recording medium storing said program of claim 13.

**16.** A computer readable recording medium storing said program of claim 14.

FIG. 1

EP 1 587 306 A2

FIG. 2 (a)

FIG. 2 (b)

FIG. 3 (a)

IDEAL IMAGE f(x, y) WITHOUT DISTORTION ABERRATION

IMAGE f'(x', y') WITH DISTORTION ABERRATION

FIG. 3 (b)

IDEAL IMAGE f(x, y) WITHOUT DISTORTION ABERRATION

IMAGE f'(x', y') WITH DISTORTION ABERRATION

EP 1 587 306 A2

FIG. 4

EP 1 587 306 A2

FIG. 5 (a)

FIG. 5 (b)

FIG. 5 (c)